# EUROPEAN PATENT SPECIFICATION

(11) **EP 4 588 014 B1**
(45) Date of publication and mention of the grant of the patent: **09.12.2026**
(21) Application number: 22813023.3
(22) Date of filing: 24.10.2022
(51) Int. Cl.: G06T 19/20, G06T 17/00

(54) **FITTING OF HEAD MOUNTED WEARABLE DEVICE FROM TWO-DIMENSIONAL IMAGE**
ANPASSUNG EINER KOPFMONTIERTEN WEARABLE-VORRICHTUNG AUS EINEM ZWEIDIMENSIONALEN BILD
AJUSTEMENT D'UN DISPOSITIF DE VISIOCASQUE À PARTIR D'UNE IMAGE BIDIMENSIONNELLE

(43) Date of publication of application: 23.07.2025
(73) Proprietor: Google LLC, Mountain View, CA 94043 (US)
(72) Inventor: ALEEM, Idris Syed, Kitchener, Ontario N2H 5G5 (CA); BHARGAVA, Mayank, Kitchener, Ontario N2H 5G5 (CA)
(74) Representative: Maikowski & Ninnemann Patentanwälte Partnerschaft mbB
(86) International application number: PCT/US2022/078573
(87) International publication number: WO 2024/091263

(56) References cited:
- WO-A2-01/88654
- US-A1- 2016 035 133
- SNAP AR: "Lens Studio Face Morph Template", 8 December 2020 (2020-12-08), XP093007784, Retrieved from the Internet <URL:https://www.youtube.com/watch?v=qbLQ4UleRFc> [retrieved on 20221213]

## Description

### TECHNICAL FIELD

This description relates, in general, to the sizing and/or fitting of a wearable device, and in particular, to the sizing and/or fitting of a head mounted wearable device.

### BACKGROUND

Wearable devices may include, for example head mounted wearable devices, wrist worn wearable devices, hand worn wearable devices, pendants, fitness trackers, body sensors, and other such devices. Head mounted wearable devices may include, for example, smart glasses, headsets, goggles, ear buds, and the like. Wrist/hand worn wearable devices may include, for example, smart watches, smart bracelets, smart rings, and the like. In some situations, a user may want to select and/or customize a wearable device for fit and/or function. For example, a user may wish to select and/or customize eyewear to include selection of frames, incorporation of prescription lenses, and other such features. The video entitled "Lens Studio Face Morph Template" by Snapchat Ar and published on 08-12-2020 discloses a Snapchat template that tracks a user's face with a mesh, morphs it to a custom face mesh, and attaches virtual decorative objects (e.g. a blue bow) that move with the user's facial expressions in real time.

### SUMMARY

The proposed solution relates to a computer-implemented method of claim 1, a non-transitory computer-readable medium of claim 8 and a system of claim 15.

Systems and methods are described herein that provide for the selection, sizing and/or fitting of a head mounted wearable device based on a two-dimensional image of a user, captured via an application executing on a computing device operated by the user. A user mesh is generated, representative of the head, for example a portion of the head, such as the face of the user, based on one or more facial landmarks detected within the image of the user. A virtual frame is positioned on a reference mesh, e.g., at a position corresponding to a sellion of the reference mesh. The reference mesh may be representative of a general face, generated based on data collected from a relatively large pool of subjects. A rigid transform may be performed to project the reference mesh and virtual frame onto the user mesh. A position of the virtual frame may be shifted, or adjusted, so that a bridge portion of the virtual frame is positioned corresponding to a sellion of the user mesh, so that the virtual frame is positioned as a corresponding physical frame would likely be worn by the user. Generally, the user mesh and/or the reference mesh may also be representative of a head of the user.

The proposed solution in particular relates to a (computer-implemented) method, in particular a method for partially or fully automated selection, sizing and/or fitting of a head mounted wearable device to user-specific requirements, the method comprising capturing, via an application executing on a computing device operated by a user, image data of an initial image including a face of the user, generating a user mesh representative of a face of the user based on the image data, identifying an indexing node in the user mesh corresponding to a set portion of the face of the user captured in the image data, identifying an indexing node in a reference mesh, the indexing node of the reference mesh corresponding to a set portion of the reference mesh, the set portion of the reference mesh corresponding to the set portion of the user mesh, positioning a virtual frame of a head mounted wearable device on the reference mesh, at a position corresponding to the indexing node of the reference mesh, projecting the reference mesh and the virtual frame onto the user mesh, and adjusting a position of the virtual frame to correspond to the indexing node of the user mesh. Based on the virtual frame adjusted in position with respect to the user mesh components of the head mounted wearable device and/or a model of the head mounted wearable device are selected or are manufactured for the user for which the user mesh was generated. An image, including a virtual rendering of the frame positioned on the face of the user, for example from the initial image captured by the user, may be presented to the user. The rendering of the frame on the face of the user may be representative of an actual fit of a corresponding physical frame on the face and head of the user, allowing the user to make a relatively accurate assessment of the fit and appearance of the frame. hereby, a partially or fully automated selection, sizing and/or fitting of a head mounted wearable device to user-specific requirements, in particular user-specific facial characteristics, based on a two-dimensional image of a user may be facilitated and/or accelerated.

The details of one or more implementations are set forth in the accompanying drawings and the description below. Other features will be apparent from the description and drawings, and from the claims.

### BRIEF DESCRIPTION OF THE DRAWINGS

FIG. 1A illustrates an example head mounted wearable device worn by a user.
FIG. 1B is a front view, and FIG. 1C is a rear view of the example head mounted wearable device shown in FIG. 1A.
FIGs. 2A-2C illustrate example ophthalmic fit measurements.
FIG. 3 is a block diagram of a system, in accordance with implementations described herein.
FIGs. 4A and 4B are front views, and FIG. 4C is a side view, of a user, illustrating example facial and/or cranial landmarks.
FIGs. 5A-5E illustrate a process of sizing and/or fitting a frame of a head mounted wearable device, in accordance with implementations described herein.
FIG. 6 is an example sizing and/or fitting image, in accordance with implementations described herein.
FIG. 7 is a flowchart of an example method, in accordance with implementations described herein.

### DETAILED DESCRIPTION

The selection of wearable devices, such as head mounted wearable devices in the form of eyewear, or glasses, may rely on the determination of the physical fit, or wearable fit, to ensure that the eyewear is comfortable when worn by the user and/or is aesthetically complementary to the user. The incorporation of corrective lenses into the head mounted wearable device may rely on the determination of ophthalmic fit, to ensure that the head mounted wearable device can provide the desired vision correction. In the case of a head mounted wearable computing device, for example, in the form of smart glasses including computing/processing and display capability, selection may also rely on the determination of a display fit, to ensure that visual content is visible to the user. Existing systems for procurement of these types of wearable devices do not provide for accurate fitting and customization, particularly without access to a retail establishment. That is, accurate sizing and/or fitting often relies on the user having access to a retail establishment, where samples are available for physical try on, and an optician facilitates the determination of wearable fit and/or ophthalmic fit and/or aesthetic fit based on physical try-on and measurements collected using specialized equipment. In some situations, existing virtual systems that provide for online selection of a wearable device, such as eyewear, or glasses, simply superimpose an image of a selected frame on an image of the user. The virtual placement of the image of the selected frame on the image of the user does not take into account user facial features which may affect the fit of the physical frames on the user. For example, variation in nose bridge height may affect how a physical frame is positioned on the face/head of the user, thus affecting fit and function of the head mounted wearable device when worn by the user. Thus, these types of systems may yield inaccurate results in the selection of eyewear in this manner.

Systems and methods, in accordance with implementations described herein, provide for the virtual fitting of a wearable device based on one or more features detected within image data. Systems and methods, in accordance with implementations described herein, make use of a reference mesh, or canonical mesh, which may be a three-dimensional representation of a body part on which the wearable device is to be worn. For example, in the selection and/or sizing and/or fitting of a head mounted wearable device, the reference mesh, or average mesh, or canonical mesh, may be representative of an average, or general face and/or head, generated based previously collected data for a relatively large pool of users. Systems and methods, in accordance with implementations described herein, may generate a user mesh, which may be a representation of the body part of the user on which the wearable device is to be worn. In the selection and/or sizing and/or fitting of a head mounted wearable device, the user mesh may be representative of the face/head of the user.

In some examples, the image data includes a two-dimensional image, captured by the user, via an application executing on a user computing device. In some examples, a selected feature (i.e., one of the one or more features detected in the image data) is mapped to a key point in the reference mesh, or canonical mesh. A rigid transformation may be applied to the key point in the reference mesh to project the key point to the user mesh. A distance between the key point in the reference mesh and the key point in the user mesh may be used to reconcile or adjust the reference mesh and the user mesh. In some examples, the distance between the key point in the reference mesh and the key point in the user mesh may be used to determine a vertical distance and a horizontal distance, for example, in pixels, for projection onto the two-dimensional image captured by the user. This may provide for more accurate placement of the wearable device on the two-dimensional image captured by the user operating the computing device. In some examples, systems and methods as described herein provide for the fitting of head mounted wearable devices in the form of smart glasses that include processing/computing capability and display capability, and/or corrective lenses. Systems and methods, in accordance with implementations described herein, may facilitate the capture of image data, for the detection of the one or more features and the fitting of the wearable device, by the user in a self-directed, or unsupervised, or unproctored manner, without access to a retail establishment and/or an in-person or virtual appointment with a technician or sales agent.

Hereinafter, systems and methods will be described with respect to the selection, sizing and/or fitting of a head mounted wearable device, simply for purposes of discussion and illustration. Of the features detectable within the two-dimensional image captured by the user, a sellion point will be used to reconcile the rigid transformation between the reference mesh and the user facial key points, simply for purposes of discussion and illustration. The principles to be described herein may be applied to the sizing and/or fitting of other types of wearable devices, including, for example, glasses that may or may not include processing/computing/display capability and/or corrective lenses, or other types of wearable devices. Similarly, the principles to be described herein may make use of other features, in addition to or instead of the sellion point, detected within the image data.

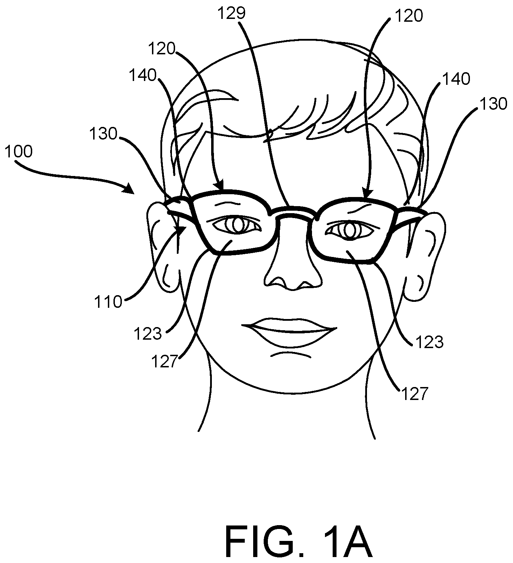

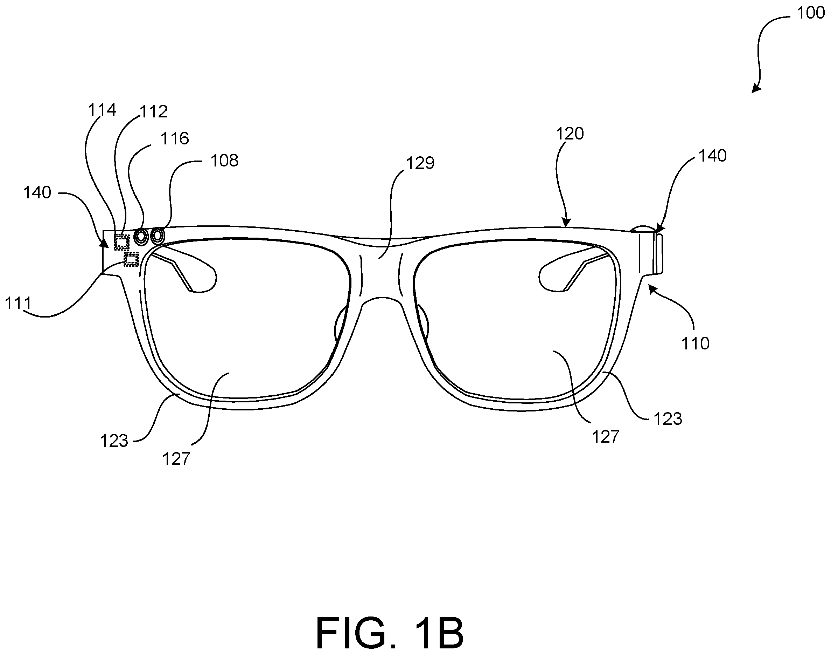

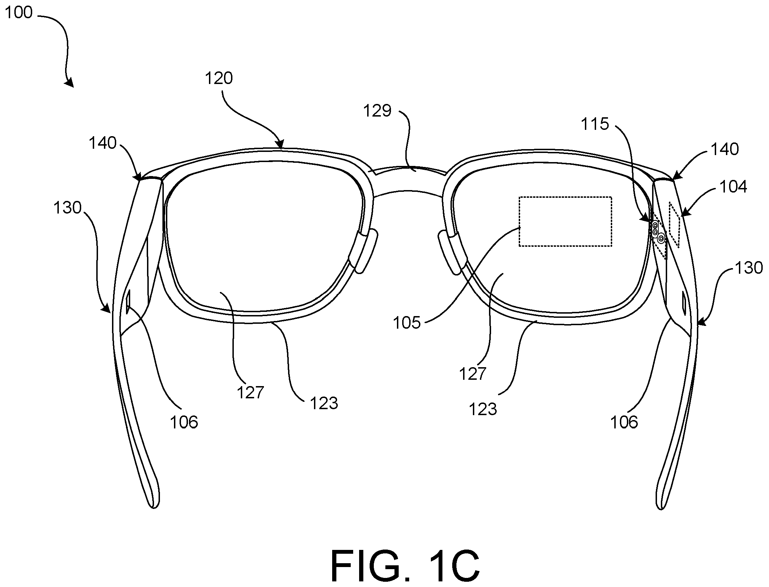

FIG. 1A illustrates a user wearing an example head mounted wearable device 100 in the form of smart glasses, or augmented reality glasses, including display capability, eye/gaze tracking capability, and computing/processing capability. FIG. 1B is a front view, and FIG. 1C is a rear view, of the example head mounted wearable device 100 shown in FIG. 1A. The example head mounted wearable device 100 includes a frame 110. The frame 110 includes a front frame portion 120, and a pair of arm portions 130 rotatably coupled to the front frame portion 120 by respective hinge portions 140. The front frame portion 120 includes rim portions 123 surrounding respective optical portions in the form of lenses 127, with a bridge portion 129 connecting the rim portions 123. The arm portions 130 are coupled, for example, pivotably or rotatably coupled, to the front frame portion 120 at peripheral portions of the respective rim portions 123. In some examples, the lenses 127 are corrective/prescription lenses. In some examples, the lenses 127 are an optical material including glass and/or plastic portions that do not necessarily incorporate corrective/prescription parameters.

In some examples, the wearable device 100 includes a display device 104 that can output visual content, for example, at an output coupler 105, so that the visual content is visible to the user. In the example shown in FIGs. 1B and 1C, the display device 104 is provided in one of the two arm portions 130, simply for purposes of discussion and illustration. Display devices 104 may be provided in each of the two arm portions 130 to provide for binocular output of content. In some examples, the display device 104 may be a see through near eye display. In some examples, the display device 104 may be configured to project light from a display source onto a portion of teleprompter glass functioning as a beamsplitter seated at an angle (e.g., 30-45 degrees). The beamsplitter may allow for reflection and transmission values that allow the light from the display source to be partially reflected while the remaining light is transmitted through. Such an optic design may allow a user to see both physical items in the world, for example, through the lenses 127, next to content (for example, digital images, user interface elements, virtual content, and the like) output by the display device 104. In some implementations, waveguide optics may be used to depict content on the display device 104.

In some examples, the head mounted wearable device 100 includes one or more of an audio output device 106 (such as, for example, one or more speakers), an illumination device 108, a sensing system 111, a control system 112, at least one processor 114, and an outward facing image sensor 116 (for example, a camera). In some examples, the sensing system 111 may include various sensing devices and the control system 112 may include various control system devices including, for example, one or more processors 114 operably coupled to the components of the control system 112. In some examples, the control system 112 may include a communication module providing for communication and exchange of information between the wearable device 100 and other external devices. In some examples, the head mounted wearable device 100 includes a gaze tracking device 115 to detect and track eye gaze direction and movement. Data captured by the gaze tracking device 115 may be processed to detect and track gaze direction and movement as a user input. In the example shown in FIGs. 1B and 1C, the gaze tracking device 115 is provided in one of the two arm portions 130, simply for purposes of discussion and illustration. In the example arrangement shown in FIGs. 1B and 1C, the gaze tracking device 115 is provided in the same arm portion 130 as the display device 104, so that user eye gaze can be tracked not only with respect to objects in the physical environment, but also with respect to the content output for display by the display device 104. In some examples, gaze tracking devices 115 may be provided in each of the two arm portions 130 to provide for gaze tracking of each of the two eyes of the user. In some examples, display devices 104 may be provided in each of the two arm portions 130 to provide for binocular display of visual content.

Numerous different sizing and fitting measurements and/or parameters may be taken into account when selecting and/or sizing and/or fitting a wearable device, such as the example head mounted wearable device 100 shown in FIGs. 1A-1C, for a particular user. This may include, for example, wearable fit parameters, or wearable fit measurements. Wearable fit parameters/measurements may take into account how a particular frame 110 fits and/or looks and/or feels on a particular user. Wearable fit parameters/measurements may take into consideration numerous factors such as, for example, whether the rim portions 123 and bridge portion 129 are shaped and/or sized so that the bridge portion 129 rests comfortably on the bridge of the user's nose, whether the frame 110 is wide enough to be comfortable with respect to the temples, but not so wide that the frame 110 cannot remain relatively stationary when worn by the user, whether the arm portions 130 are sized to comfortably rest on the user's ears, and other such comfort related considerations. Wearable fit parameters/measurements may take into account other as-worn considerations including how the frame 110 may be positioned based on the user's natural head pose/where the user tends to naturally wear his/her glasses. In some examples, aesthetic fit measurements or parameters may take into account whether the frame 110 is aesthetically pleasing to the user/compatible with the user's facial features, and the like.

In a head mounted wearable device including display capability, display fit parameters, or display fit measurements may be taken into account in selecting and/or sizing and/or fitting the head mounted wearable device 100 for a particular user. Display fit parameters/measurements may be used to configure the display device 104 for a selected frame 110 for a particular user, so that content output by the display device 104 is visible to the user. For example, display fit parameters/measurements may facilitate calibration of the display device 104, so that visual content is output within at least a set portion of the field of view of the user. For example, the display fit parameters/measurements may be used to configure the display device 104 to provide at least a set level of gazability, corresponding to an amount, or portion, or percentage of the visual content that is visible to the user at a periphery (for example, a least visible corner) of the field of view of the user.

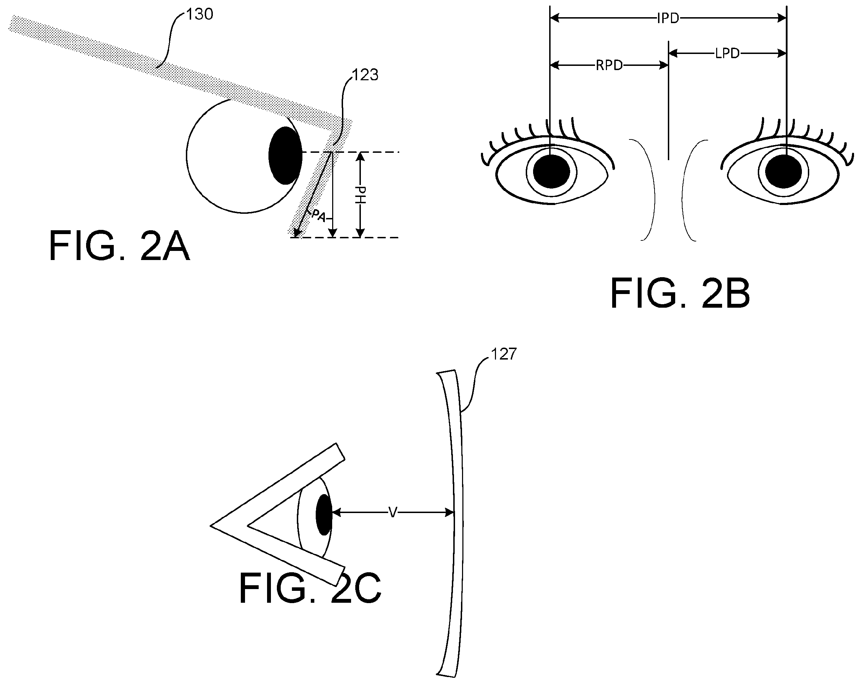

In an example in which the head mounted wearable device 100 is to include corrective lenses, ophthalmic fit parameters, or ophthalmic fit measurements may be taken into account in the selecting and/or sizing and/or fitting process. Some example ophthalmic fit measurements are shown in FIGs. 2A-2C. Ophthalmic fit measurements may include, for example, a pupil height PH (a distance from a center of the pupil to a bottom of the respective lens 127). Ophthalmic fit measurements may include an interpupillary distance IPD (a distance between the pupils). IPD may be characterized by a monocular pupil distance, for example, a left pupil distance LPD (a distance from a central portion of the bridge of the nose to the left pupil) and a right pupil distance RPD (a distance from the central portion of the bridge of nose to right pupil). Ophthalmic fit measurements may include a pantoscopic angle PA (an angle defined by the tilt of the lens 127 with respect to vertical). Ophthalmic fit measurements may include a vertex distance V (a distance from the cornea to the respective lens 127). Ophthalmic fit measurements may include other such parameters, or measures that provide for the selecting and/or sizing and/or fitting of a head mounted wearable device 100 including corrective lenses, with or without a display device 104 as described above. In some examples, ophthalmic fit measurements, together with display fit measurements, may provide for the output of visual content by the display device 104 within a defined three-dimensional volume such that content is within a corrected field of view of the user, and thus visible to the user.

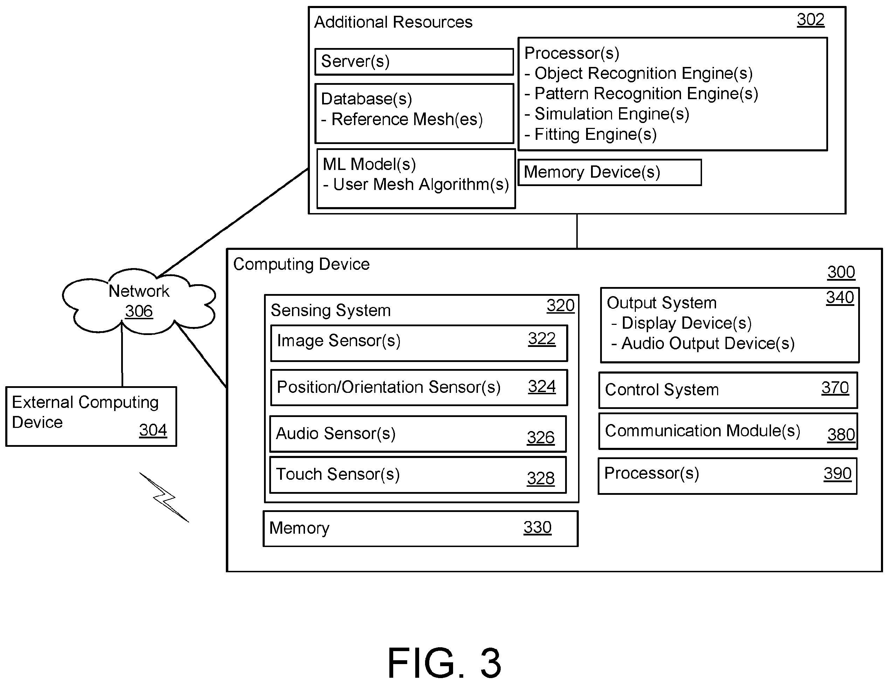

FIG. 3 is a block diagram of an example system for predicting sizing and/or fitting of a wearable device from at least one key point, or landmark, or feature, detected in at least one image, for example, a two-dimensional image, captured by a computing device operated by a user. The system may make use of at least one three-dimensional reference mesh, or canonical mesh, in determining the sizing and/or fitting of the wearable device. In an example in which the wearable device is a head mounted wearable device, the reference mesh may be representative of a general head, generated based on previously collected data from a relatively large pool of subjects. The wearable devices that can be sized and/or fitted by the system in this manner can include various wearable computing devices as described above. Hereinafter, the sizing and/or fitting of a head mounted wearable device, such as the example head mounted wearable device 100, by the system will be described, simply for purposes of discussion and illustration.

The system may include one or more computing devices 300. The computing device 300 may be operated by a user for which the wearable device is to be sized and/or fitted. The computing device 300 may be, for example, a handheld device such as a smart phone or a tablet computing device, a desktop or laptop computing device, and other such computing devices that can be operated by the user to capture an image of the user. The computing device 300 can access additional resources 302 to facilitate the sizing and/or fitting of the wearable device. In some examples, the additional resources 302 may be available locally on the computing device 300. In some examples, the additional resources 302 may be available to the computing device 300 via a network 306. In some examples, some of the additional resources 302 may be available locally on the computing device 300, and some of the additional resources 302 may be available to the computing device 300 via the network 306.The additional resources 302 may include, for example, server computer systems, processors, databases, machine learning modules, memory storage, and the like. In some examples, the processor(s) 390 may provide for various processing functionality via, for example, object recognition engine(s), pattern recognition engine(s), simulation engine(s), fitting engine(s), and other such processors. In some examples, the additional resources 302 include machine learning models and/or algorithms in support of the sizing and/or fitting of a wearable device.

The computing device 300 can operate under the control of a control system 370. The computing device 300 can communicate with one or more external devices 304 (another wearable computing device, another mobile computing device and the like) either directly (via wired and/or wireless communication), or via the network 306. In some examples, the computing device 300 includes a communication module 380 to facilitate external communication. In some examples, the computing device 300 includes a sensing system 320 including various sensing system components including, for example one or more image sensors 322, one or more position/orientation sensor(s) 324 (including for example, an inertial measurement unit, an accelerometer, a gyroscope, a magnetometer and the like), one or more audio sensors 326 that can detect audio input, one or more touch input sensors 328 that can detect touch inputs, and other such sensors. The computing device 300 can include more, or fewer, sensing devices and/or combinations of sensing devices.

In some examples, the image sensor(s) 322 may include, for example, cameras such as, for example, forward facing cameras, outward, or world facing cameras, and the like that can capture still and/or moving images of an environment outside of the computing device 300. The still and/or moving images may be displayed by a display device of an output system 340, and/or transmitted externally via the communication module 380 and the network 306, and/or stored in a memory 330 of the computing device 300 and/or a memory device available in the additional resources 302.

The computing device 300 may include one or more processor(s) 390. The processors 390 may include various modules or engines configured to perform various functions. In some examples, the processor(s) 390 may include object recognition module(s), pattern recognition module(s), configuration identification modules(s), and other such processors. The processor(s) 390 may be formed in a substrate configured to execute one or more machine executable instructions or pieces of software, firmware, or a combination thereof. The processor(s) 390 can be semiconductor-based including semiconductor material that can perform digital logic. The memory 330 may include any type of storage device that stores information in a format that can be read and/or executed by the processor(s) 390. The memory 330 may store applications and modules that, when executed by the processor(s) 390, perform certain operations. In some examples, the applications and modules may be stored in an external storage device and loaded into the memory 330.

As noted above, systems and methods, in accordance with implementations described herein, provide for the selection and/or sizing and/or fitting of a frame of a head mounted wearable device. In some examples, one or more key points, or one or more landmarks, or one or more features, may be detected in image data of a face and/or head of a user. The image data may be a two-dimensional image captured via an application executing on a computing device operated by the user. In some examples, the one or more key points, or landmarks, or features, include a sellion, or a sellion point. The sellion may be defined at the midline of the nasal root, or nose bridge, of the user. The sellion may be positioned at the point of maximal curvature of the nasal profile, at the root end of the nose bridge, at a transition point between the nose bridge and the forehead. The sellion may represent the deepest depression of the nasal bones.

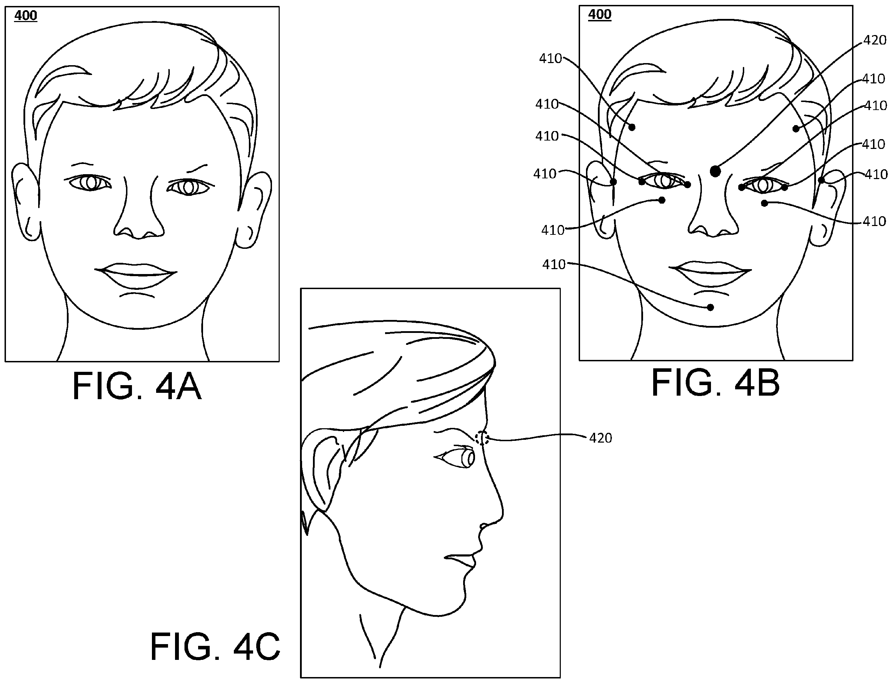

FIG. 4A is an example two-dimensional image 400, capturable via an application executing on a computing device operated by the user, such as, for example, the example computing device 300 described above with respect to FIG. 3. The example two-dimensional image 400 provides a substantially frontal view of the user. FIG. 4B illustrates a plurality of example key points, or features, or landmarks 410 that may be detected in the two-dimensional image 400 of the user, including a sellion 420 at the root end of the user's nose bridge. More, or fewer key points, or features, or landmarks 410, than shown in FIG. 4B may be detected in the two-dimensional image 400 captured via the application executing on the computing device operated by the user. FIG. 4C is a side view of the user, provided simply to further illustrate the position of the sellion 420 with respect to the nose bridge of the user.

The two-dimensional image 400 of the face of the user may be captured via an application executing on a computing device such as the computing device 300, operated by the user, as described above. Object recognition engine(s) and/or pattern recognition engine(s), available via the additional resources 302, may analyze the image 400 to detect the one or more landmarks 410, including the sellion 420. In some examples, any of the landmarks 410 or grouping of landmarks 410 could be used to predict the positioning and/or fit of the frame on the face and/or head of the user. However, physical positioning of the frame on the face/head of the user can vary and be noticeably affected based on nose bridge height, nose shape and the like. For example, a relatively higher or lower nose bridge height can cause a noticeable shift in the vertical positioning of the frame on a face of the user. This may lead to inaccuracies in the virtual sizing and/or fitting of a frame for a head mounted wearable device. Thus, the use of the sellion 420 to predict the virtual placement of the frame on the image 400 of the face/head of the user may provide a more accurate prediction of sizing and/or fitting of the frame of the head mounted wearable device in a virtual fitting situation.

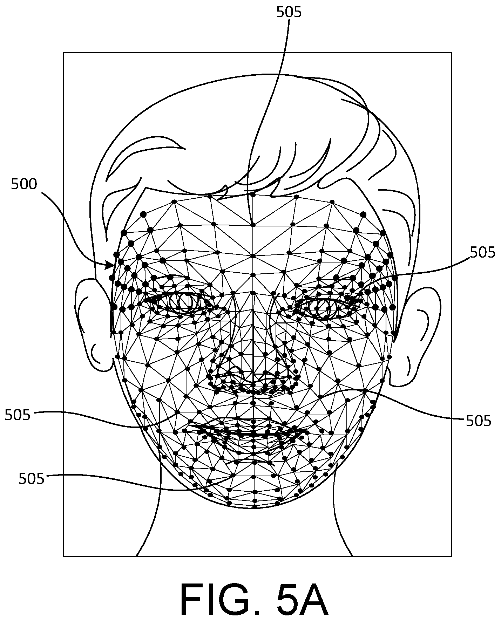

Hereinafter, systems and methods will be described with respect to the use of the sellion 420 detected in the two-dimensional image 400 to predict the placement of a virtual frame on the image 400 of the user for the purpose of a virtual fitting. In some examples, a simulation engine, available to the computing device 300, for example, via the additional resources 302, may access one or more machine learning models, available via the additional resources, to generate a user mesh 500, as shown in FIG. 5A. The user mesh 500 may be generated based on data obtained through the analysis of the two-dimensional image 400 by the object recognition engine(s) and/or the pattern recognition engine(s). The user mesh 500 may be representative of the face/head of the user, based on the two-dimensional image 400 captured by the user. The user mesh 500 may include a plurality of interconnected nodes, some of which are labeled with the reference numeral 505 in FIG. 5A.

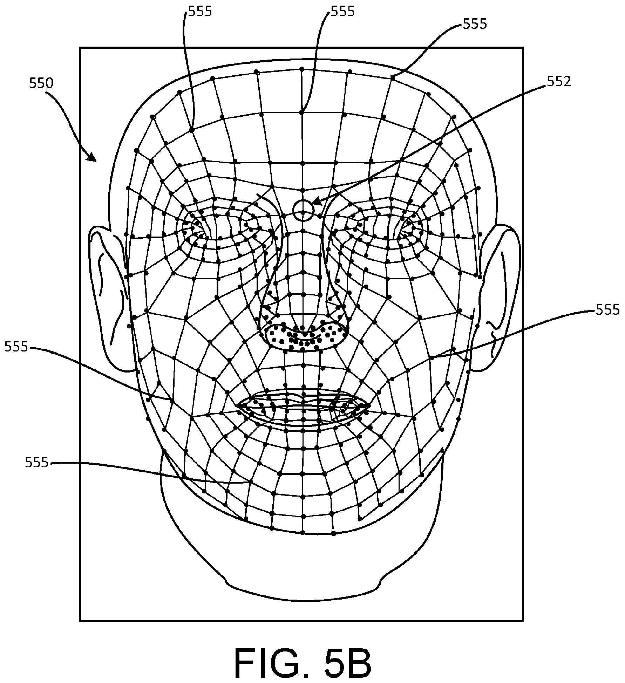

In some examples, a reference mesh 550, as shown in FIG. 5B, may be accessible to the computing device 300 via, for example, one of the database(s) of the additional resources 302. The reference mesh 550 may be representative of a general face/head, developed based on data collected from a relatively large pool of subjects. The reference mesh 550 may include a plurality of interconnected nodes, some of which are labeled with the reference numeral 555 in FIG. 5B. As the reference mesh 550 is a somewhat generic mesh representative of a general face/head, developed based on data collected from a relatively large pool of subjects, the reference mesh 550 is not specific to the user mesh 500. That is, there is not a one-to-one correspondence between the nodes 555 of the reference mesh 550 and the nodes 505 of the user mesh 500.

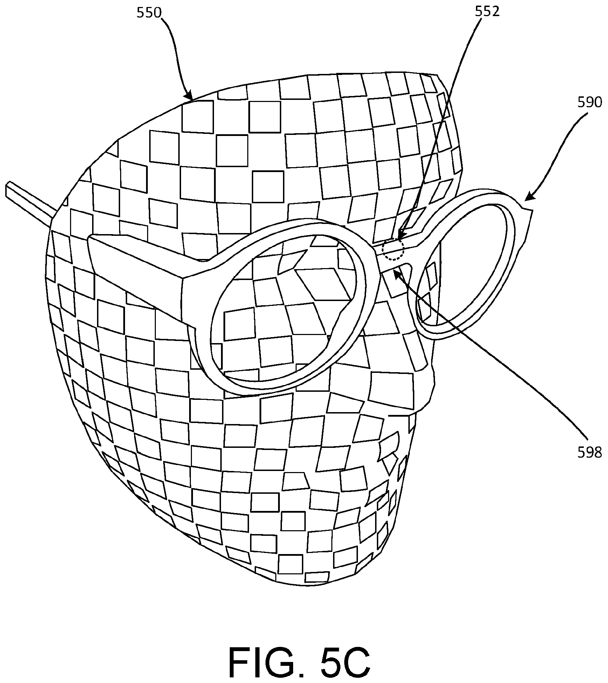

In some examples, one of the plurality of nodes 555 of the reference mesh 550 may be identified as an indexing node. In the examples described herein, the indexing node of the reference mesh 550 may be one of the plurality of nodes 555 that maps most closely to the position of the sellion in the reference mesh 550. In this example, the indexing node may be identified as the sellion node 552, as shown in FIG. 5B. As shown in FIG. 5C, a virtual frame 590 may be positioned on the reference mesh 550, with a bridge portion 598 of the virtual frame 590 positioned corresponding to the sellion node 552 to simulate where a corresponding physical frame would be naturally worn by a user having a face/head matching the reference mesh 550.

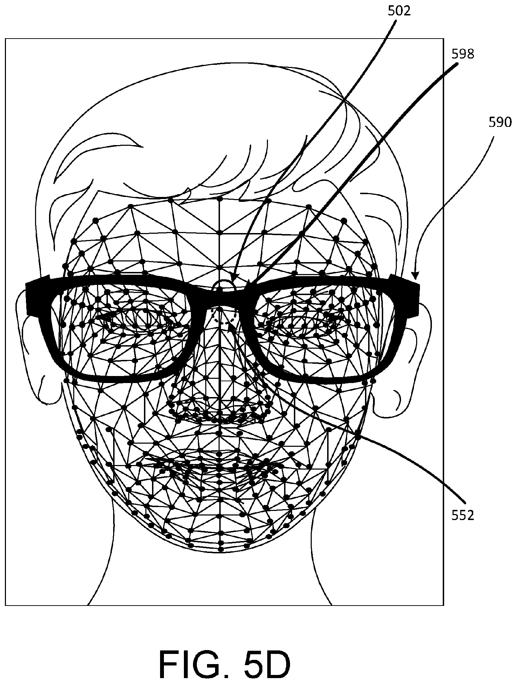

A rigid transform of the reference mesh 550 (with the virtual frame 590 positioned thereon) may be performed to project the reference mesh 550 (and the virtual frame 590) onto the user mesh 500, as shown in FIG. 5D. In some examples, the rigid transform includes a rotation, translation and scaling of some number of the nodes 555 of the reference mesh 550, or a subset of the nodes 555 of the reference mesh 550, to correlate with the corresponding/respective subset of nodes 505 of the user mesh 500. This rigid transform does not yield a node-to-node correspondence for each node of the reference mesh 550 and the user mesh 500. However, this approach may provide an approximation that can be adjusted to predict sizing and/or fitting of a selected frame of a head mounted wearable device.

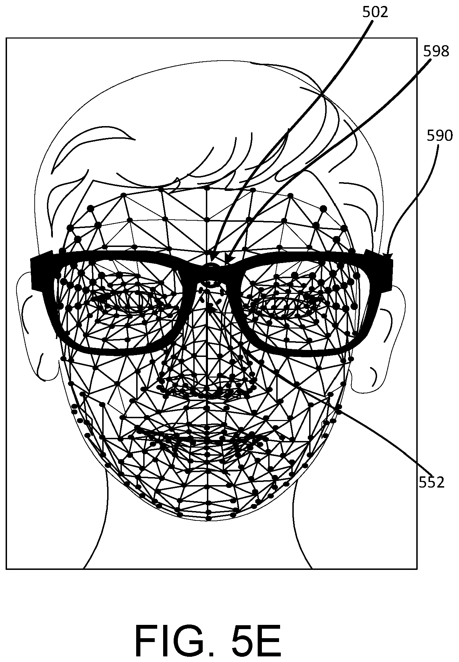

FIG. 5D illustrates an initial placement position of the virtual frame 590 on the face/head of the user, based on the projection of the reference mesh 550 (and the virtual frame 590) onto the user mesh 500. As shown in FIG. 5D, there is a positional difference (a vertical difference, in the orientation shown in FIG. 5D) between the indexing node of the reference mesh 550, i.e., the sellion node 552 (and associated initial placement position of the bridge portion 598 of the virtual frame 590 from the reference mesh 550) and the indexing node of the user mesh 500, i.e., the sellion node 502 identified in the user mesh 500. FIG. 5E illustrates an adjusted virtual placement position of the virtual frame 590 on the head/face of the user. In FIG. 5E, the position of the virtual frame 590 has been adjusted or shifted, so that a position of the bridge portion 598 of the corresponds to the sellion node 502 of the user mesh 500. The shifting of the virtual frame 590, from the initial virtual placement position shown in FIG. 5D to the adjusted virtual position shown in FIG. 5E, may position the virtual frame 590 on the head/face of the user at a position that more closely simulates how a corresponding physical frame would be worn by the user. This may provide a more representative indication of the sizing and/or fitting of a selected frame of a head mounted wearable device on the face/head of the user.

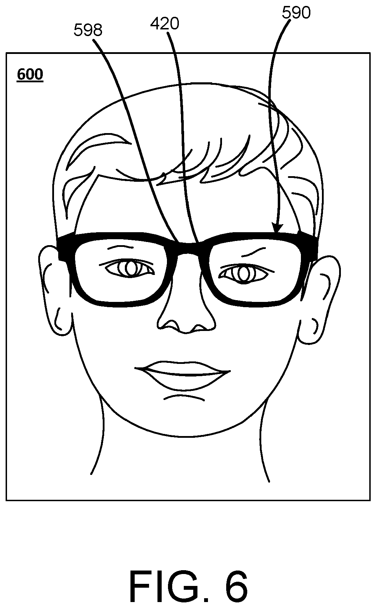

FIG. 6 illustrates a two-dimensional image 600 of the virtual frame 590 positioned on the head/face of the user, at the adjusted virtual position. The two-dimensional image 600 may be presented to the user, for example, via the application executing on the computing device operated by the user. In some examples, the virtual frame 590 may be superimposed on the initial image 400 shown in FIG. 4A to generate the image 600 shown in FIG. 6. The position of the virtual frame 590 in the image 600 shown in FIG. 6 is representative of how the corresponding physical frame would be worn by the user, how the corresponding physical frame would look on the face of the user, and how the corresponding physical frame would fit the user. Thus, the user may evaluate the image 600 of the virtual frame 590 positioned on the head/face of the user, at the adjusted virtual position, to confirm the sizing and/or fitting of a selected frame for the head mounted wearable device.

As noted above, the sellion may be relatively reliably detected within the two-dimensional image 400 captured by the user. Accordingly, the sellion 420 detected within the image 400 may provide a relatively reliable reference point for the placement of the virtual frame 590 on the face/head of the user in the image 400, which in turn may provide for relatively reliable virtual sizing and/or fitting of a head mounted wearable device for the user. In the example described above, a single, general reference mesh is used. As noted above, the reference mesh 550 is generated based on data collected from a relatively large pool of subjects. The rigid transform of a subset of the nodes 555 of the reference mesh 550 to a corresponding subset of the nodes 505 of the user mesh 500 may provide a relatively reliable basis for the initial virtual placement of the virtual frame 590 on the face/head of the user in the two-dimensional image 400. The identification of the sellion node 502 in the user mesh 500 (based on the detection of the sellion 420 in the image 400 of the user), and identification of the sellion node 552 in the reference mesh 550 may provide a basis for the shifting of the virtual frame 590 from the initial virtual placement position to the adjusted virtual placement position, proximate the sellion node 502 in the user mesh 500 (corresponding to the sellion 420 identified in the image 400 of the user). The adjusted virtual placement position may be representative of where a corresponding physical frame would be naturally worn by the user.

The relatively lower computational load associated with performing the rigid transform in this manner, with the placement position of the virtual frame 590 being adjusted based on the position of the sellion, may allow these processes to be performed locally, on the user device, rather than relying on the user of external computing resources. This may facilitate the virtual sizing and/or fitting of the head mounted wearable device for the user without the need for access to a retail establishment, and/or without the assistance of an optician or sales agent (either virtual or in person) and/or without the use of specialized equipment.

Examples described above make use of a single reference mesh in the determination of placement position of the virtual frame 590 on the face/head of the user for the virtual sizing and/or fitting of the head mounted wearable device. In some implementations, more than one reference mesh may be available to perform the sizing and/or fitting operations as described above.

For example, as described above, nose bridge height (detectable, for example, based on identification of the sellion 420 in the image 400 of the user) may affect how and where a physical frame of a head mounted wearable device is worn by the user. The systems and methods described above are implemented using a single reference mesh that is projected, via rigid transform, onto the user mesh. In some examples, a plurality of reference meshes, based on nose bridge height, may be available to facilitate the sizing and/or fitting of the head mounted wearable device. In some examples, the system may select a reference mesh, from a plurality of reference meshes, that is most suitable for the sizing and/or fitting of a frame of a head mounted wearable device for a particular user. For example, the system may select a first reference mesh in response to a determination that the user has an average nose bridge height. Similarly, the system may select a second reference mesh in response to a determination that the user has a relatively high nose bridge height, and may select a third reference mesh in response to a determination that the user has a relatively low nose bridge height. The first reference mesh may be generated based on data collected from a relatively large pool of subjects all determined to have an average nose bridge height. Similarly, the second reference mesh may be generated based on data collected from a relatively large pool of subjects all determined to have a relatively high nose bridge height, and the third reference mesh may be generated based on data collected from a relatively large pool of subjects all determined to have a relatively low nose bridge height. The implementation of a reference mesh that is more closely suited to the facial characteristics of the user may improve the accuracy of the virtual placement of the virtual frame on the face/head of the user (compared to how the corresponding physical frame would be worn by the user), and/or may reduce the computational load associated with the virtual placement of the frame on the image of the face/head of the user.

In some examples, the system may determine that the user has an average nose bridge height, or a relatively high nose bridge height, or a relatively low nose bridge height, based on a detected position of the sellion 420 compared to the other facial landmarks 410 detected in the two-dimensional image 400. In some examples, the object/pattern recognition engine(s), the simulation engine(s) and/or the machine learning model(s) described above may facilitate the detection of the facial landmarks 410 and the sellion 420, and the determination of whether the user falls into a first category of users having an average nose bridge height, a second category of users having a relatively high nose bridge height, or a third category of users having a relatively low nose bridge height. In some examples, threshold distances between various facial landmarks 410 and/or between facial landmarks 410 and the sellion 420 may be used to determine whether the user falls into the first category, or the second category, or the third category. The system may select a reference mesh, for example from a plurality of reference meshes available to the system, for the virtual sizing and/or fitting of a frame of a head mounted wearable device, based on which category is associated with the user. The selected reference mesh may then be applied in a similar manner as described above, to place the virtual frame 590 on the face/head of the user.

Nose bridge height is just one example of how the use of multiple reference meshes may further facilitate the sizing and/or fitting of a head mounted wearable device for a particular user. Other reference meshes may be similarly implemented, based on other characteristics, for example, characteristics and/or features that may be detectable in the image 400 captured via the application executing on the computing device operated by the user. This may include, for example, characteristics associated with a width of the nose of the user, for example, one or more widths taken at designated portions of the nose, a ratio of widths taken at designated portions of the nose, and the like. Other characteristics may include, for example, detected contours and/or change in contours of the nose which may affect where the bridge portion of a frame would be positioned on the nose of the user, and other such characteristics and/or features.

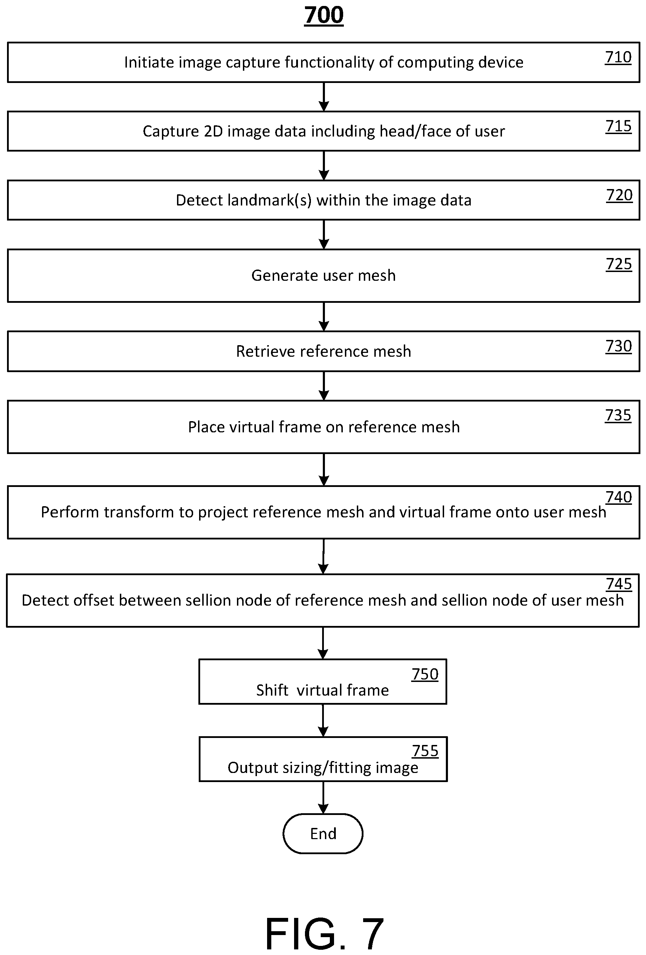

FIG. 7 is a flowchart of an example method 700 of an example method, in accordance with implementations described herein. A user operating a computing device (such as, for example, the computing device 300 described above, or other computing device) may initiate image capture functionality of the computing device (block 710). The image capture functionality may be accessed via an application executing on the computing device operated by the user. Initiation of the image capture functionality may cause an image sensor (such as, for example, an image sensor of a front facing camera of the computing device 300 described above) to capture a two-dimensional image data including a face and/or a head of the user (block 715). One or more fixed features, or landmarks, may be detected within the image (block 720). The one or more fixed features, or landmarks, may include facial landmarks that remain substantially static, such as a sellion, defined at the midline of the nasal root, or nose bridge, of the user, and other such fixed facial landmarks. A user mesh may be generated based on an analysis of the image and the detected one or more facial landmarks (block 725). In some examples, the user mesh may be generated by one or more machine learning models accessible to the computing device. The system may access, or retrieve, a reference mesh (block 730). The reference mesh may be retrieved from a database accessible to the user. In some examples, a single reference mesh is available. In some examples, multiple reference meshes representing multiple different facial characteristics, such as differing nose bridge height categorizations, may be available. A virtual frame, associated with the sizing and/or fitting of a head mounted wearable device for the user, may be placed on the reference mesh (block 735). The virtual frame may be placed on the reference mesh based on a node, of a plurality of nodes of the reference mesh, and in particular, identification of a sellion node of the reference mesh corresponding to a sellion area of the reference mesh. A transform may be performed to project the reference mesh and the virtual frame onto the user mesh (block 740). The transform is a rigid transform including rotation, translation and scaling fitting at least some of the nodes of the reference mesh to the user mesh. In response to a determination that the sellion node of the reference mesh is aligned with a corresponding sellion node of the user mesh (block 745), a sizing/fitting image may be output, for example, via the application executing on the computing device. In response to a determination that the sellion node of the reference mesh is offset from, or not aligned with the corresponding sellion node of the user mesh (block 745), the system may shift the placement position of the virtual frame (block 755), from the initial placement position (in which a bridge portion of the virtual frame is positioned at the sellion node of the reference mesh, offset from the sellion node of the user mesh), to an adjusted position (in which the bridge portion of the virtual frame is positioned corresponding to the sellion node of the user mesh) prior to outputting the sizing/fitting image (block 750).

In the following, some examples are provided.

Example 1: A computer-implemented method, including capturing, via an application executing on a computing device operated by a user, image data including an initial image of a face of the user; generating a user mesh, the user mesh being representative of a face of the user based on the image data; identifying an indexing node in the user mesh corresponding to a set portion of the face of the user captured in the image data; identifying an indexing node in a reference mesh, the indexing node of the reference mesh corresponding to a set portion of the reference mesh, the set portion of the reference mesh corresponding to the set portion of the user mesh; positioning a virtual frame of a head mounted wearable device on the reference mesh, at a position corresponding to the indexing node of the reference mesh; projecting the reference mesh and the virtual frame onto the user mesh; and adjusting a position of the virtual frame to correspond to the indexing node of the user mesh.

Example 2: The computer-implemented method of example 1, wherein identifying the indexing node in the user mesh includes identifying a sellion node in the user mesh, the sellion node corresponding to a position of a sellion portion of the face of the user captured in the image data; and identifying the indexing node in the reference mesh includes identifying a sellion node in the reference mesh, the sellion node corresponding to a position of a sellion portion of a face represented by the reference mesh.

Example 3: The computer-implemented method of example 1 or example 2, wherein projecting the reference mesh and the virtual frame onto the user mesh includes performing a rigid transformation of the reference mesh and the virtual frame to the user mesh.

Example 4: The computer-implemented method of example 3, wherein the reference mesh includes a plurality of nodes, and wherein performing the rigid transformation includes performing a rotation operation, a translation operation, and a scaling operation on a subset of the plurality of nodes of the reference mesh to fit the reference mesh to the user mesh.

Example 5: The computer-implemented method of any one of the preceding examples, wherein generating the user mesh includes detecting one or more facial landmarks in the image data; and generating, by a machine learning model, the user mesh based on the one or more facial landmarks.

Example 6: The computer-implemented method of any one of the preceding examples, also including outputting a fitting image, the fitting image including a rendering of the virtual frame, superimposed on the initial image of the face of the user, generated based on the image data, at the position corresponding to the indexing node of the user mesh.

Example 7: The computer-implemented method of example 6, wherein adjusting the position of the virtual frame includes comparing a position of the indexing node of the reference mesh to a position of the indexing node of the user mesh, including detecting a distance between the indexing node in the reference mesh and the indexing node in the user mesh; determining a corresponding pixel distance between the indexing node of the reference mesh and the indexing node of the user mesh; and adjusting a position of the virtual frame in the fitting image based on the pixel distance.

Example 8: The computer-implemented method of any one of the preceding examples, wherein capturing the image data includes capturing a two-dimensional image of the face of the user; and wherein the user mesh is a three-dimensional mesh corresponding to the face of the user, and the reference mesh is a three-dimensional mesh generated based on previously collected data representing a plurality of subjects.

Example 9: The computer-implemented method of any one of the preceding examples, further comprising selecting a reference mesh, from a plurality of reference meshes, including detecting at least one facial landmark in the image data; mapping the at least one facial landmark to a corresponding node of the user mesh; selecting the reference mesh from the plurality of reference meshes based on relative positions indexing node of the user mesh and the node corresponding to the at least one facial landmark in the user mesh.

Example 10: A non-transitory computer-readable medium storing instructions that, when executed by at least one processor of a computing device, are configured to cause the at least one processor to capture, by an image sensor of the computing device, image data including an initial image of a face of a user; generate a user mesh, the user mesh being representative of a face of the user based on the image data; identify an indexing node in the user mesh corresponding to a set portion of the face of the user captured in the image data; identify an indexing node in a reference mesh, the indexing node of the reference mesh corresponding to a set portion of the reference mesh, the set portion of the reference mesh corresponding to the set portion of the user mesh; position a virtual frame of a head mounted wearable device on the reference mesh, at a position corresponding to the indexing node of the reference mesh; project the reference mesh and the virtual frame onto the user mesh; and adjust a position of the virtual frame to correspond to the indexing node of the user mesh.

Example 11: The non-transitory computer-readable medium of example 10, wherein the instructions cause the at least one processor to identify the indexing node in the user mesh including identify a sellion node in the user mesh, the sellion node corresponding to a position of a sellion portion of the face of the user captured in the image data; and identify the indexing node in the reference mesh including identify a sellion node in the reference mesh, the sellion node corresponding to a position of a sellion portion of a face represented by the reference mesh.

Example 12: The non-transitory computer-readable medium of example 10 or example 11, wherein he instructions cause the at least one processor to perform a rigid transformation of the reference mesh and the virtual frame to the user mesh to project the reference mesh and the virtual frame onto the user mesh.

Example 13: The non-transitory computer-readable medium of example 12, wherein the reference mesh includes a plurality of nodes, and wherein the instructions cause the at least one processor to perform the rigid transformation, including a rotation operation, a translation operation, and a scaling operation, on a subset of the plurality of nodes of the reference mesh to fit the reference mesh to the user mesh.

Example 14: The non-transitory computer-readable medium of any one of example 10 to example 13, wherein the instructions cause the at least one processor to detect one or more facial landmarks in the image data; and generate, by a machine learning model, the user mesh based on the one or more facial landmarks.

Example 15: The non-transitory computer-readable medium of any one of example 10 to example 14, wherein the instructions cause the at least one processor to output a fitting image, the fitting image including a rendering of the virtual frame, superimposed on the initial image of the face of the user, generated based on the image data, at the position corresponding to the indexing node of the user mesh.

Example 16: The non-transitory computer-readable medium of example 15, wherein the instructions cause the at least one processor to compare a position of the indexing node of the reference mesh to a position of the indexing node of the user mesh, including detect a distance between the indexing node in the reference mesh and the indexing node in the user mesh; determine a corresponding pixel distance between the indexing node of the reference mesh and the indexing node of the user mesh; and adjust a position of the virtual frame in the fitting image based on the pixel distance.

Example 17: The non-transitory computer-readable medium of any one of example 10 to example 16, wherein the instructions cause the at least one processor to capture a two-dimensional image of the face of the user, and wherein the user mesh is a three-dimensional mesh corresponding to the face of the user, and the reference mesh is a three-dimensional mesh generated based on previously collected data representing a plurality of subjects.

Example 18: The non-transitory computer-readable medium of any one of example 10 to example 17, wherein the instructions cause the at least one processor to select a reference mesh, from a plurality of reference meshes, including detect at least one facial landmark in the image data; map the at least one facial landmark to a corresponding node of the user mesh; select the reference mesh from the plurality of reference meshes based on relative positions indexing node of the user mesh and the node corresponding to the at least one facial landmark in the user mesh.

Example 19: A system, including a computing device, including an image sensor; at least one processor; and a memory storing instructions that, when executed by the at least one processor, cause the at least one processor to capture image data including an initial image of a face of a user; generate a user mesh, the user mesh being representative of a face of the user based on the image data; identify a sellion node in the user mesh corresponding to a sellion portion of the face of the user captured in the image data; identify a sellion node in a reference mesh, the sellion node of the reference mesh corresponding to a sellion portion of the reference mesh, the sellion portion of the reference mesh corresponding to the sellion portion of the user mesh; position a virtual frame of a head mounted wearable device on the reference mesh, at a position corresponding to the sellion node of the reference mesh; project the reference mesh and the virtual frame onto the user mesh; and adjust a position of the virtual frame to correspond to the sellion node of the user mesh.

A number of implementations have been described. Nevertheless, it will be understood that various modifications may be made without departing from the scope of the appended independent claims.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

Further to the descriptions above, a user may be provided with controls allowing the user to make an election as to both if and when systems, programs, or features described herein may enable collection of user information (e.g., information about a user's social network, social actions, or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

While certain features of the described implementations have been illustrated as described herein, many modifications, substitutions, changes and equivalents are covered as long as within the scope of the appended independent claims.

## Claims

1. A computer-implemented method, comprising:
capturing, via an application executing on a computing device (300) operated by a user, image data including an initial image (400) of a face of the user;
generating a user mesh (500), the user mesh being representative of a face of the user based on the image data;
identifying an indexing node (502, 505) in the user mesh corresponding to a set portion of the face of the user captured in the image data;
identifying, from a plurality of nodes in a reference mesh (550), an indexing node (552, 555), the indexing node of the reference mesh corresponding to a set portion of the reference mesh, the set portion of the reference mesh corresponding to the set portion of the user mesh;
positioning a virtual frame (590) of a head mounted wearable device (100) on the reference mesh, at a position corresponding to the indexing node of the reference mesh;
projecting the reference mesh and the virtual frame onto the user mesh, wherein projecting the reference mesh and the virtual frame onto the user mesh includes performing a rigid transformation that includes scaling of the reference mesh and the virtual frame to the user mesh fitting at least some of the plurality of nodes of the reference mesh to the user mesh;
outputting a sizing and/or fitting image (600), the sizing and/or fitting image including a rendering of the virtual frame, superimposed on the initial image of the face of the user, generated based on the image data, at the position corresponding to the indexing node of the user mesh; and
adjusting a position of the virtual frame to correspond to the indexing node of the user mesh.

2. The computer-implemented method of claim 1, wherein:
identifying the indexing node in the user mesh includes identifying a sellion node (502) in the user mesh, the sellion node corresponding to a position of a sellion portion of the face of the user captured in the image data; and
identifying the indexing node in the reference mesh includes identifying a sellion node (552) in the reference mesh, the sellion node corresponding to a position of a sellion portion of a face represented by the reference mesh.

3. The computer-implemented method of claim 1 or 2, wherein performing the rigid transformation further includes performing a rotation operation, a translation operation, and the scaling operation on a subset of the plurality of nodes of the reference mesh to fit the reference mesh to the user mesh.

4. The computer-implemented method of any one of the preceding claims, wherein generating the user mesh includes:
detecting one or more facial landmarks (410, 420) in the image data; and
generating, by a machine learning model, the user mesh based on the one or more facial landmarks.

5. The computer-implemented method of any one of the preceding claims, wherein adjusting the position of the virtual frame includes:
comparing a position of the indexing node of the reference mesh to a position of the indexing node of the user mesh including:
detecting a distance between the indexing node in the reference mesh and the indexing node in the user mesh;
determining a corresponding pixel distance between the indexing node of the reference mesh and the indexing node of the user mesh; and
adjusting a position of the virtual frame in the sizing and/or fitting image based on the pixel distance.

6. The computer-implemented method of any one of the preceding claims,
wherein capturing the image data includes capturing a two-dimensional image of the face of the user; and
wherein the user mesh is a three-dimensional mesh corresponding to the face of the user, and the reference mesh is a three-dimensional mesh generated based on previously collected data representing a plurality of subjects.

7. The computer-implemented method of any one of the preceding claims, further comprising selecting a reference mesh, from a plurality of reference meshes, including:
detecting at least one facial landmark (410, 420) in the image data;
mapping the at least one facial landmark to a corresponding node of the user mesh;
selecting the reference mesh from the plurality of reference meshes based on relative positions indexing node of the user mesh and the node corresponding to the at least one facial landmark in the user mesh.

8. A non-transitory computer-readable medium storing instructions that, when executed by at least one processor (390) of a computing device (300), are configured to cause the at least one processor to:
capture, by an image sensor (322) of the computing device, image data including an initial image (400) of a face of a user;
generate a user mesh (500), the user mesh being representative of a face of the user based on the image data;
identify an indexing node (502, 505) in the user mesh corresponding to a set portion of the face of the user captured in the image data;
identify, from a plurality of nodes in a reference mesh (550), an indexing node (552, 555), the indexing node of the reference mesh corresponding to a set portion of the reference mesh, the set portion of the reference mesh corresponding to the set portion of the user mesh;
position a virtual frame (590) of a head mounted wearable device (100) on the reference mesh, at a position corresponding to the indexing node of the reference mesh;
project the reference mesh and the virtual frame onto the user mesh, wherein projecting the reference mesh and the virtual frame onto the user mesh includes performing a rigid transformation that includes scaling of the reference mesh and the virtual frame to the user mesh fitting at least some of the plurality of nodes of the reference mesh to the user mesh;
output a sizing and/or fitting image (600), the sizing and/or fitting image including a rendering of the virtual frame, superimposed on the initial image of the face of the user, generated based on the image data, at the position corresponding to the indexing node of the user mesh; and
adjust a position of the virtual frame to correspond to the indexing node of the user mesh.

9. The non-transitory computer-readable medium of claim 8, wherein the instructions cause the at least one processor to:
identify the indexing node in the user mesh including identify a sellion node (502) in the user mesh, the sellion node corresponding to a position of a sellion portion of the face of the user captured in the image data; and
identify the indexing node in the reference mesh including identify a sellion node (552) in the reference mesh, the sellion node corresponding to a position of a sellion portion of a face represented by the reference mesh.

10. The non-transitory computer-readable medium of claim 8 or 9, wherein the instructions cause the at least one processor to perform the rigid transformation, including a rotation operation, a translation operation, and the scaling operation, on a subset of the plurality of nodes of the reference mesh to fit the reference mesh to the user mesh.

11. The non-transitory computer-readable medium of any one of claims 8 to 10, wherein the instructions cause the at least one processor to:
detect one or more facial landmarks (410, 420) in the image data; and
generate, by a machine learning model, the user mesh based on the one or more facial landmarks.

12. The non-transitory computer-readable medium of any of claims 8 to 11, wherein the instructions cause the at least one processor to adjust the position of the virtual frame including:
comparing a position of the indexing node of the reference mesh to a position of the indexing node of the user mesh including:
detect a distance between the indexing node in the reference mesh and the indexing node in the user mesh;
determine a corresponding pixel distance between the indexing node of the reference mesh and the indexing node of the user mesh; and
adjust a position of the virtual frame in the sizing and/or fitting image based on the pixel distance.

13. The non-transitory computer-readable medium of any one of claims 8 to 12, wherein the instructions cause the at least one processor to capture a two-dimensional image of the face of the user, and wherein the user mesh is a three-dimensional mesh corresponding to the face of the user, and the reference mesh is a three-dimensional mesh generated based on previously collected data representing a plurality of subjects.

14. The non-transitory computer-readable medium of any one of claims 8 to 13, wherein the instructions cause the at least one processor to select a reference mesh, from a plurality of reference meshes, including:
detect at least one facial landmark (410, 420) in the image data;
map the at least one facial landmark to a corresponding node of the user mesh; and
select the reference mesh from the plurality of reference meshes based on relative positions indexing node of the user mesh and the node corresponding to the at least one facial landmark in the user mesh.

15. A system, comprising:
a computing device (300), including:
an image sensor (322);
at least one processor (390); and
a memory (330) storing instructions that, when executed by the at least one processor, cause the at least one processor to:
capture image data including an initial image (400) of a face of a user;
generate a user mesh (500), the user mesh being representative of a face of the user based on the image data;
identify a indexing node (502, 505) in the user mesh corresponding to a set portion of the face of the user captured in the image data;
identify, from a plurality of nodes in a reference mesh (550), a indexing node (552, 555), the indexing node of the reference mesh corresponding to a set portion of the reference mesh, the set portion of the reference mesh corresponding to the set portion of the user mesh;
position a virtual frame (590) of a head mounted wearable device (100) on the reference mesh, at a position corresponding to the indexing node of the reference mesh;
project the reference mesh and the virtual frame onto the user mesh, wherein projecting the reference mesh and the virtual frame onto the user mesh includes performing a rigid transformation that includes scaling of the reference mesh and the virtual frame to the user mesh fitting at least some of the plurality of nodes of the reference mesh to the user mesh;
output a sizing and/or fitting image (600), the sizing and/or fitting image including a rendering of the virtual frame, superimposed on the initial image of the face of the user, generated based on the image data, at the position corresponding to the indexing node of the user mesh; and
adjust a position of the virtual frame to correspond to the indexing node of the user mesh.

## Patentansprüche

1. Computerimplementiertes Verfahren, umfassend:
Erfassen, über eine Anwendung, die auf einer von einem Benutzer bedienten Rechenvorrichtung (300) ausgeführt wird, von Bilddaten, die ein Ausgangsbild (400) eines Gesichts des Benutzers beinhalten;
Erzeugen eines Benutzernetzes (500), wobei das Benutzernetz basierend auf den Bilddaten für ein Gesicht des Benutzers repräsentativ ist;
Identifizieren eines Indexierungsknotens (502, 505) in dem Benutzernetz, der einem festgelegten Abschnitt des Gesichts des Benutzers entspricht, das in den Bilddaten erfasst ist;
Identifizieren eines Indexierungsknotens (552, 555) aus einer Vielzahl von Knoten in einem Referenznetz (550), wobei der Indexierungsknoten des Referenznetzes einem festgelegten Abschnitt des Referenznetzes entspricht, wobei der festgelegte Abschnitt des Referenznetzes dem festgelegten Abschnitt des Benutzernetzes entspricht;
Positionieren eines virtuellen Rahmens (590) einer kopfmontierten Wearable-Vorrichtung (100) auf dem Referenznetz an einer Position, die dem Indexierungsknoten des Referenznetzes entspricht;
Projizieren des Referenznetzes und des virtuellen Rahmens auf das Benutzernetz, wobei Projizieren des Referenznetzes und des virtuellen Rahmens auf das Benutzernetz Durchführen einer starren Transformation beinhaltet, die Skalieren des Referenznetzes und des virtuellen Rahmens auf das Benutzernetz beinhaltet, wodurch mindestens einige der Vielzahl von Knoten des Referenznetzes an das Benutzernetz angepasst werden;
Ausgeben eines Größenbestimmungs- und/oder Anpassungsbildes (600), wobei das Größenbestimmungs- und/oder Anpassungsbild eine Darstellung des virtuellen Rahmens beinhaltet, die an der Position, die dem Indexierungsknoten des Benutzernetzes entspricht, dem Ausgangsbild des Gesichts des Benutzers überlagert ist, erzeugt basierend auf den Bilddaten; und
Einstellen einer Position des virtuellen Rahmens derart, dass sie dem Indexierungsknoten des Benutzernetzes entspricht.

2. Computerimplementiertes Verfahren nach Anspruch 1, wobei:
Identifizieren des Indexierungsknotens in dem Benutzernetz Identifizieren eines Sellionknotens (502) in dem Benutzernetz beinhaltet, wobei der Sellionknoten einer Position eines Sellionabschnitts des Gesichts des Benutzers entspricht, das in den Bilddaten erfasst ist; und
Identifizieren des Indexierungsknotens in dem Referenznetz Identifizieren eines Sellionknotens (552) in dem Referenznetz beinhaltet, wobei der Sellionknoten einer Position eines Sellionabschnitts eines Gesichts entspricht, das durch das Referenznetz dargestellt ist.

3. Computerimplementiertes Verfahren nach Anspruch 1 oder 2, wobei Durchführen der starren Transformation ferner Durchführen einer Drehoperation, einer Translationsoperation und der Skalierungsoperation an einer Teilmenge der Vielzahl von Knoten des Referenznetzes beinhaltet, um das Referenznetz an das Benutzernetz anzupassen.

4. Computerimplementiertes Verfahren nach einem der vorhergehenden Ansprüche, wobei Erzeugen des Benutzernetzes beinhaltet:
Detektieren einer oder mehrerer Gesichtslandmarken (410, 420) in den Bilddaten; und
Erzeugen des Benutzernetzes durch ein Maschinenlernmodell basierend auf der einen oder den mehreren Gesichtslandmarken.

5. Computerimplementiertes Verfahren nach einem der vorhergehenden Ansprüche, wobei Einstellen der Position des virtuellen Rahmens beinhaltet:
Vergleichen einer Position des Indexierungsknotens des Referenznetzes mit einer Position des Indexierungsknotens des Benutzernetzes, beinhaltend:
Detektieren eines Abstands zwischen dem Indexierungsknoten in dem Referenznetz und dem Indexierungsknoten in dem Benutzernetz;
Bestimmen eines entsprechenden Pixelabstands zwischen dem Indexierungsknoten des Referenznetzes und dem Indexierungsknoten des Benutzernetzes; und
Einstellen einer Position des virtuellen Rahmens in dem Größenbestimmungs- und/oder Anpassungsbild basierend auf dem Pixelabstand.

6. Computerimplementiertes Verfahren nach einem der vorhergehenden Ansprüche, wobei Erfassen der Bilddaten Erfassen eines zweidimensionalen Bildes des Gesichts des Benutzers beinhaltet; und
wobei das Benutzernetz ein dreidimensionales Netz ist, das dem Gesicht des Benutzers entspricht, und das Referenznetz ein dreidimensionales Netz ist, das basierend auf zuvor gesammelten Daten erzeugt ist, die eine Vielzahl von Personen darstellen.

7. Computerimplementiertes Verfahren nach einem der vorhergehenden Ansprüche, ferner umfassend Auswählen eines Referenznetzes aus einer Vielzahl von Referenznetzen, beinhaltend:
Detektieren mindestens einer Gesichtslandmarke (410, 420) in den Bilddaten;
Zuordnen der mindestens einen Gesichtslandmarke zu einem entsprechenden Knoten des Benutzernetzes;
Auswählen des Referenznetzes aus der Vielzahl von Referenznetzen basierend auf Relativpositionen des Indexierungsknotens des Benutzernetzes und des Knotens, der der mindestens einen Gesichtslandmarke in dem Benutzernetz entspricht.

8. Nichtflüchtiges computerlesbares Medium, das Anweisungen speichert, die, wenn sie durch mindestens einen Prozessor (390) einer Rechenvorrichtung (300) ausgeführt werden, dazu konfiguriert sind, den mindestens einen Prozessor zu veranlassen:
durch einen Bildsensor (322) der Rechenvorrichtung Bilddaten zu erfassen, die ein Ausgangsbild (400) eines Gesichts eines Benutzers beinhalten;
ein Benutzernetz (500) zu erzeugen, wobei das Benutzernetz basierend auf den Bilddaten für ein Gesicht des Benutzers repräsentativ ist;
einen Indexierungsknoten (502, 505) in dem Benutzernetz zu identifizieren, der einem festgelegten Abschnitt des Gesichts des Benutzers entspricht, das in den Bilddaten erfasst ist;
aus einer Vielzahl von Knoten in einem Referenznetz (550) einen Indexierungsknoten (552, 555) zu identifizieren, wobei der Indexierungsknoten des Referenznetzes einem festgelegten Abschnitt des Referenznetzes entspricht, wobei der festgelegte Abschnitt des Referenznetzes dem festgelegten Abschnitt des Benutzernetzes entspricht;
einen virtuellen Rahmen (590) einer kopfmontierten Wearable-Vorrichtung (100) auf dem Referenznetz an einer Position zu positionieren, die dem Indexierungsknoten des Referenznetzes entspricht;
das Referenznetz und den virtuellen Rahmen auf das Benutzernetz zu projizieren, wobei Projizieren des Referenznetzes und des virtuellen Rahmens auf das Benutzernetz Durchführen einer starren Transformation beinhaltet, die Skalieren des Referenznetzes und des virtuellen Rahmens auf das Benutzernetz beinhaltet, wodurch mindestens einige der Vielzahl von Knoten des Referenznetzes an das Benutzernetz angepasst werden;
ein Größenbestimmungs- und/oder Anpassungsbild (600) auszugeben, wobei das Größenbestimmungs- und/oder Anpassungsbild eine Darstellung des virtuellen Rahmens beinhaltet, die an der Position, die dem Indexierungsknoten des Benutzernetzes entspricht, dem Ausgangsbild des Gesichts des Benutzers überlagert ist, erzeugt basierend auf den Bilddaten; und
eine Position des virtuellen Rahmens derart einzustellen, dass sie dem Indexierungsknoten des Benutzernetzes entspricht.

9. Nichtflüchtiges computerlesbares Medium nach Anspruch 8, wobei die Anweisungen den mindestens einen Prozessor veranlassen:
den Indexierungsknoten in dem Benutzernetz zu identifizieren, wobei Identifizieren des Indexierungsknotens Identifizieren eines Sellionknotens (502) in dem Benutzernetz beinhaltet, wobei der Sellionknoten einer Position eines Sellionabschnitts des Gesichts des Benutzers entspricht, das in den Bilddaten erfasst ist; und
den Indexierungsknoten in dem Referenznetz zu identifizieren, wobei Identifizieren des Indexierungsknotens Identifizieren eines Sellionknotens (552) in dem Referenznetz beinhaltet, wobei der Sellionknoten einer Position eines Sellionabschnitts eines Gesichts entspricht, das durch das Referenznetz dargestellt ist.

10. Nichtflüchtiges computerlesbares Medium nach Anspruch 8 oder 9, wobei die Anweisungen den mindestens einen Prozessor veranlassen, die starre Transformation, beinhaltend eine Drehoperation, eine Translationsoperation und die Skalierungsoperation, an einer Teilmenge der Vielzahl von Knoten des Referenznetzes durchzuführen, um das Referenznetz an das Benutzernetz anzupassen.

11. Nichtflüchtiges computerlesbares Medium nach einem der Ansprüche 8 bis 10, wobei die Anweisungen den mindestens einen Prozessor veranlassen:
eine oder mehrere Gesichtslandmarken (410, 420) in den Bilddaten zu detektieren; und
durch ein Maschinenlernmodell das Benutzernetz basierend auf der einen oder den mehreren Gesichtslandmarken zu erzeugen.

12. Nichtflüchtiges computerlesbares Medium nach einem der Ansprüche 8 bis 11, wobei die Anweisungen den mindestens einen Prozessor veranlassen, die Position des virtuellen Rahmens einzustellen, beinhaltend:
Vergleichen einer Position des Indexierungsknotens des Referenznetzes mit einer Position des Indexierungsknotens des Benutzernetzes, beinhaltend:
Detektieren eines Abstands zwischen dem Indexierungsknoten in dem Referenznetz und dem Indexierungsknoten in dem Benutzernetz;
Bestimmen eines entsprechenden Pixelabstands zwischen dem Indexierungsknoten des Referenznetzes und dem Indexierungsknoten des Benutzernetzes; und
Einstellen einer Position des virtuellen Rahmens in dem Größenbestimmungs- und/oder Anpassungsbild basierend auf dem Pixelabstand.

13. Nichtflüchtiges computerlesbares Medium nach einem der Ansprüche 8 bis 12, wobei die Anweisungen den mindestens einen Prozessor veranlassen, ein zweidimensionales Bild des Gesichts des Benutzers zu erfassen, und wobei das Benutzernetz ein dreidimensionales Netz ist, das dem Gesicht des Benutzers entspricht, und das Referenznetz ein dreidimensionales Netz ist, das basierend auf zuvor gesammelten Daten erzeugt ist, die eine Vielzahl von Personen darstellen.

14. Nichtflüchtiges computerlesbares Medium nach einem der Ansprüche 8 bis 13, wobei die Anweisungen den mindestens einen Prozessor veranlassen, ein Referenznetz aus einer Vielzahl von Referenznetzen auszuwählen, beinhaltend:
Detektieren mindestens einer Gesichtslandmarke (410, 420) in den Bilddaten;
Zuordnen der mindestens einen Gesichtslandmarke zu einem entsprechenden Knoten des Benutzernetzes; und
Auswählen des Referenznetzes aus der Vielzahl von Referenznetzen basierend auf Relativpositionen des Indexierungsknotens des Benutzernetzes und des Knotens, der der mindestens einen Gesichtslandmarke in dem Benutzernetz entspricht.

15. System, umfassend:
eine Rechenvorrichtung (300), beinhaltend:
einen Bildsensor (322);
mindestens einen Prozessor (390); und
einen Speicher (330), der Anweisungen speichert, die, wenn sie durch den mindestens einen Prozessor ausgeführt werden, den mindestens einen Prozessor veranlassen:
Bilddaten zu erfassen, die ein Ausgangsbild (400) eines Gesichts eines Benutzers beinhalten;
ein Benutzernetz (500) zu erzeugen, wobei das Benutzernetz basierend auf den Bilddaten für ein Gesicht des Benutzers repräsentativ ist;
einen Indexierungsknoten (502, 505) in dem Benutzernetz zu identifizieren, der einem festgelegten Abschnitt des Gesichts des Benutzers entspricht, das in den Bilddaten erfasst ist;
aus einer Vielzahl von Knoten in einem Referenznetz (550) einen Indexierungsknoten (552, 555) zu identifizieren, wobei der Indexierungsknoten des Referenznetzes einem festgelegten Abschnitt des Referenznetzes entspricht, wobei der festgelegte Abschnitt des Referenznetzes dem festgelegten Abschnitt des Benutzernetzes entspricht;
einen virtuellen Rahmen (590) einer kopfmontierten Wearable-Vorrichtung (100) auf dem Referenznetz an einer Position zu positionieren, die dem Indexierungsknoten des Referenznetzes entspricht;
das Referenznetz und den virtuellen Rahmen auf das Benutzernetz zu projizieren, wobei Projizieren des Referenznetzes und des virtuellen Rahmens auf das Benutzernetz Durchführen einer starren Transformation beinhaltet, die Skalieren des Referenznetzes und des virtuellen Rahmens auf das Benutzernetz beinhaltet, wodurch mindestens einige der Vielzahl von Knoten des Referenznetzes an das Benutzernetz angepasst werden;
ein Größenbestimmungs- und/oder Anpassungsbild (600) auszugeben, wobei das Größenbestimmungs- und/oder Anpassungsbild eine Darstellung des virtuellen Rahmens beinhaltet, die an der Position, die dem Indexierungsknoten des Benutzernetzes entspricht, dem Ausgangsbild des Gesichts des Benutzers überlagert ist, erzeugt basierend auf den Bilddaten; und
eine Position des virtuellen Rahmens derart einzustellen, dass sie dem Indexierungsknoten des Benutzernetzes entspricht.

## Revendications

1. Procédé mis en œuvre par ordinateur, comprenant :
la capture, par l'intermédiaire d'une application s'exécutant sur un dispositif informatique (300) exploité par un utilisateur, de données d'image comportant une image initiale (400) d'un visage de l'utilisateur ;
la génération d'un maillage utilisateur (500), le maillage utilisateur étant représentatif d'un visage de l'utilisateur sur la base des données d'image ;
l'identification d'un nœud d'indexation (502, 505) dans le maillage utilisateur correspondant à une portion définie du visage de l'utilisateur capturée dans les données d'image ;
l'identification, à partir d'une pluralité de nœuds dans un maillage de référence (550), d'un nœud d'indexation (552, 555), le nœud d'indexation du maillage de référence correspondant à une portion définie du maillage de référence, la portion définie du maillage de référence correspondant à la portion définie du maillage utilisateur ;
le positionnement d'un cadre virtuel (590) d'un dispositif de visiocasque (100) sur le maillage de référence, à une position correspondant au nœud d'indexation du maillage de référence ;
la projection du maillage de référence et du cadre virtuel sur le maillage utilisateur, dans lequel la projection du maillage de référence et du cadre virtuel sur le maillage utilisateur comporte l'exécution d'une transformation rigide qui comporte la mise à l'échelle du maillage de référence et du cadre virtuel sur le maillage utilisateur, en adaptant au moins une partie de la pluralité de nœuds du maillage de référence au maillage utilisateur ;
la génération d'une image de dimensionnement et/ou de réglage (600), l'image de dimensionnement et/ou de réglage comportant un rendu du cadre virtuel, superposé à l'image initiale du visage de l'utilisateur, générée sur la base des données d'image, à la position correspondant au nœud d'indexation du maillage utilisateur ; et
le réglage d'une position du cadre virtuel pour qu'elle corresponde au nœud d'indexation du maillage utilisateur.

2. Procédé mis en œuvre par ordinateur selon la revendication 1, dans lequel :
l'identification du nœud d'indexation dans le maillage utilisateur comporte l'identification d'un nœud sellion (502) dans le maillage utilisateur, le nœud sellion correspondant à une position d'une portion sellion du visage de l'utilisateur capturée dans les données d'image ; et
l'identification du nœud d'indexation dans le maillage de référence comporte l'identification d'un nœud sellion (552) dans le maillage de référence, le nœud sellion correspondant à une position d'une portion sellion d'une face représentée par le maillage de référence.

3. Procédé mis en œuvre par ordinateur selon la revendication 1 ou 2, dans lequel l'exécution de la transformation rigide comporte en outre l'exécution d'une opération de rotation, d'une opération de translation et d'une opération de mise à l'échelle sur un sous-ensemble de la pluralité de nœuds du maillage de référence pour adapter le maillage de référence au maillage utilisateur.

4. Procédé mis en œuvre par ordinateur selon l'une quelconque des revendications précédentes, dans lequel la génération du maillage utilisateur comporte :
la détection d'un ou des points de repère faciaux (410, 420) dans les données d'image ; et
la génération, par un modèle d'apprentissage automatique, du maillage utilisateur sur la base du ou des points de repère faciaux.

5. Procédé par ordinateur selon l'une quelconque des revendications précédentes, dans lequel le réglage de la position du cadre virtuel comporte :
la comparaison d'une position du nœud d'indexation du maillage de référence avec une position du nœud d'indexation du maillage utilisateur, comportant :
la détection d'une distance entre le nœud d'indexation dans le maillage de référence et le nœud d'indexation dans le maillage utilisateur ;
la détermination d'une distance en pixels correspondante entre le nœud d'indexation du maillage de référence et le nœud d'indexation du maillage utilisateur ; et
le réglage d'une position du cadre virtuel dans l'image de dimensionnement et/ou de réglage sur la base de la distance en pixels.

6. Procédé mis en œuvre par ordinateur selon l'une quelconque des revendications précédentes, dans lequel la capture des données d'image comporte la capture d'une image bidimensionnelle du visage de l'utilisateur ; et
dans lequel le maillage utilisateur est un maillage tridimensionnel correspondant au visage de l'utilisateur, et le maillage de référence est un maillage tridimensionnel généré à partir de données collectées précédemment représentant une pluralité de sujets.

7. Procédé mis en œuvre par ordinateur selon l'une quelconque des revendications précédentes, comprenant en outre la sélection d'un maillage de référence parmi une pluralité de maillages de référence, comportant :
la détection d'au moins un point de repère facial (410, 420) dans les données d'image ;
l'association de l'au moins un point de repère facial à un nœud correspondant du maillage utilisateur ;
la sélection du maillage de référence parmi la pluralité de maillages de référence sur la base de positions relatives des nœuds d'indexation du maillage utilisateur et du nœud correspondant à l'au moins un point de repère facial dans le maillage utilisateur.

8. Support non transitoire lisible par ordinateur stockant des instructions qui, lorsqu'elles sont exécutées par au moins un processeur (390) d'un dispositif informatique (300), sont configurées pour amener l'au moins un processeur à :
capturer, par un capteur d'image (322) du dispositif informatique, des données d'image comportant une image initiale (400) d'un visage d'un utilisateur ;
générer un maillage utilisateur (500), le maillage utilisateur étant représentatif d'un visage de l'utilisateur sur la base des données d'image ;
identifier un nœud d'indexation (502, 505) dans le maillage utilisateur correspondant à une portion définie du visage de l'utilisateur capturée dans les données d'image ;
identifier, à partir d'une pluralité de nœuds dans un maillage de référence (550), un nœud d'indexation (552, 555), le nœud d'indexation du maillage de référence correspondant à une portion définie du maillage de référence, la portion définie du maillage de référence correspondant à la portion définie du maillage utilisateur ;
positionner un cadre virtuel (590) d'un dispositif de visiocasque (100) sur le maillage de référence, à une position correspondant au nœud d'indexation du maillage de référence ;
projeter le maillage de référence et le cadre virtuel sur le maillage utilisateur, dans lequel la projection du maillage de référence et du cadre virtuel sur le maillage utilisateur comporte l'exécution d'une transformation rigide qui comporte la mise à l'échelle du maillage de référence et du cadre virtuel sur le maillage utilisateur, en adaptant au moins une partie de la pluralité de nœuds du maillage de référence au maillage utilisateur ;
générer une image de dimensionnement et/ou de réglage (600), l'image de dimensionnement et/ou de réglage comportant un rendu du cadre virtuel, superposé à l'image initiale du visage de l'utilisateur, générée sur la base des données d'image, à la position correspondant au nœud d'indexation du maillage utilisateur ; et
régler une position du cadre virtuel pour qu'elle corresponde au nœud d'indexation du maillage utilisateur.

9. Support lisible par ordinateur non transitoire selon la revendication 8, dans lequel les instructions amènent l'au moins un processeur à :
identifier le nœud d'indexation dans le maillage utilisateur, y compris identifier un nœud sellion (502) dans le maillage utilisateur, le nœud sellion correspondant à une position d'une portion sellion du visage de l'utilisateur capturée dans les données d'image ; et
identifier le nœud d'indexation dans le maillage de référence, y compris identifier un nœud sellion (552) dans le maillage de référence, le nœud sellion correspondant à une position d'une portion sellion d'une face représentée par le maillage de référence.

10. Support lisible par ordinateur non transitoire selon la revendication 8 ou 9, dans lequel les instructions amènent l'au moins un processeur à effectuer la transformation rigide, comportant une opération de rotation, une opération de translation et une opération de mise à l'échelle, sur un sous-ensemble de la pluralité de nœuds du maillage de référence, afin de régler le maillage de référence au maillage utilisateur.

11. Support non transitoire lisible par ordinateur selon l'une quelconque des revendications 8 à 10, dans lequel les instructions amènent l'au moins un processeur à :
détecter l'un ou plusieurs parmi les points de repère faciaux (410, 420) dans les données d'image ; et
générer, par un modèle d'apprentissage automatique, le maillage utilisateur sur la base du ou des points de repère faciaux.

12. Support non transitoire lisible par ordinateur selon l'une quelconque des revendications 8 à 11, dans lequel les instructions amènent l'au moins un processeur à régler la position du cadre virtuel, comportant :
la comparaison d'une position du nœud d'indexation du maillage de référence avec une position du nœud d'indexation du maillage utilisateur, comportant :
la détection d'une distance entre le nœud d'indexation dans le maillage de référence et le nœud d'indexation dans le maillage utilisateur ;
la détermination d'une distance en pixels correspondante entre le nœud d'indexation du maillage de référence et le nœud d'indexation du maillage utilisateur ; et
le réglage d'une position du cadre virtuel dans l'image de dimensionnement et/ou de réglage sur la base de la distance en pixels.

13. Support non transitoire lisible par ordinateur selon l'une quelconque des revendications 8 à 12, dans lequel les instructions amènent l'au moins un processeur à capturer une image bidimensionnelle du visage de l'utilisateur, et dans lequel le maillage utilisateur est un maillage tridimensionnel correspondant au visage de l'utilisateur, et le maillage de référence est un maillage tridimensionnel généré sur la base de données précédemment collectées représentant une pluralité de sujets.

14. Support non transitoire lisible par ordinateur selon l'une quelconque des revendications 8 à 13, dans lequel les instructions amènent l'au moins un processeur à sélectionner un maillage de référence, parmi une pluralité de maillages de référence, comportant :
la détection d'au moins un point de repère facial (410, 420) dans les données d'image ;
l'association de l'au moins un point de repère facial à un nœud correspondant du maillage utilisateur ; et
la sélection du maillage de référence parmi la pluralité de maillages de référence sur la base de positions relatives des nœuds d'indexation du maillage utilisateur et du nœud correspondant à l'au moins un point de repère facial dans le maillage utilisateur.

15. Système, comprenant :
un dispositif informatique (300), comportant :
un capteur d'image (322) ;
au moins un processeur (390) ; et
une mémoire (330) stockant des instructions qui, lorsqu'elles sont exécutées par l'au moins un processeur, amènent l'au moins un processeur à :
capturer des données d'image comportant une image initiale (400) d'un visage d'un utilisateur ;
générer un maillage utilisateur (500), le maillage utilisateur étant représentatif d'un visage de l'utilisateur sur la base des données d'image ;
identifier un nœud d'indexation (502, 505) dans le maillage utilisateur correspondant à une portion définie du visage de l'utilisateur capturée dans les données d'image ;
identifier, à partir d'une pluralité de nœuds dans un maillage de référence (550), un nœud d'indexation (552, 555), le nœud d'indexation du maillage de référence correspondant à une portion définie du maillage de référence, la portion définie du maillage de référence correspondant à la portion définie du maillage utilisateur ;
positionner un cadre virtuel (590) d'un dispositif de visiocasque (100) sur le maillage de référence, à une position correspondant au nœud d'indexation du maillage de référence ;
projeter le maillage de référence et le cadre virtuel sur le maillage utilisateur, dans lequel la projection du maillage de référence et du cadre virtuel sur le maillage utilisateur comporte l'exécution d'une transformation rigide qui comporte la mise à l'échelle du maillage de référence et du cadre virtuel sur le maillage utilisateur, en adaptant au moins une partie de la pluralité de nœuds du maillage de référence au maillage utilisateur ;
générer une image de dimensionnement et/ou de réglage (600), l'image de dimensionnement et/ou de réglage comportant un rendu du cadre virtuel, superposé à l'image initiale du visage de l'utilisateur, générée sur la base des données d'image, à la position correspondant au nœud d'indexation du maillage utilisateur ; et
régler une position du cadre virtuel pour qu'elle corresponde au nœud d'indexation du maillage utilisateur.
